# EUROPEAN PATENT APPLICATION

(11) **EP 0 749 919 A1**
(43) Date of publication of application: **27.12.1996**
(21) Application number: 96304486.2
(22) Date of filing: 17.06.1996
(51) Int. Cl.: B65G 45/14

(54) **Cleaning apparatus for conveyors**

(30) Priority: 22.06.1995 GB 9512725
(71) Applicant: LAPORTE E.S.D. LIMITED, London WC1B 3RA (GB)
(72) Inventor: Brown, Stanley Robert, Carnreagh,Hillsbor.BT26 6HB,County Down (GB)
(74) Representative: Green, Mark Charles

(57) **Abstract**

A cleaning apparatus (22) for use in the cleaning of a moveable conveyor belt (20) comprises a flexible ribbon of resilient porous material (24), such as a paper tape, which is coated with a cleaning solution. The ribbon is brought in to contact with the conveyor belt surface (20) and is caused to move in the opposite direction to the direction of travel of the conveyor belt, the relative movement therebetween effecting a wiping action, thereby cleaning the surface of the belt.

## Description

This invention relates to the cleaning of conveyor belts, and more particularly to continuous conveyor belt cleaning apparatus.

Prior proposals for conveyor belt cleaning apparatus include passing the conveyor belt over stationary scrapers and relying on the relative movement of the scraper and the belt to remove unwanted material from the conveyor belt surface.

It has also been proposed to use brushes which either rotate against, or sweep across a conveyor belt surface. These prior art devices have not been found to clean the conveyor belt adequately and can cause undue wear and/or damage to the conveyor belt surface.

It is therefore an object of the present invention to provide a cleaning apparatus which attempts to obviate or mitigate the disadvantages of the prior art; and/or to provide improvements generally.

According to the present invention there is provided cleaning apparatus as claimed in the accompanying claims.

In an embodiment of the invention there is provided a cleaning element in the form of a flexible ribbon of resilient porous material which may be brought into contact with a moveable conveyor belt. When the material of the ribbon is in contact with the conveyor belt, the relative movement therebetween effects a wiping action thereby, cleaning the conveying surface of the conveyor belt.

GB-A-2067497 (Van der Merwe) describes a method for cleaning a conveyor belt wherein a brush is driven by movement of the belt and brushes in a direction opposite to the direction of movement of the belt. GB-A-2072118 (MMD) describes a cleaning apparatus for a flexible conveyor which includes a plurality of cleaning blades extending laterally across the conveyor to be cleaned.

GB-A-1506270 (Omni-Lift) describes a method of cleaning conveyor belts which comprises positioning adjacent to the surface of the belt an endless belt having a plurality of spaced, flexible fingers projecting from one surface thereof, all of the fingers being inclined relative to the surface of the belt, the fingers thus contacting and cleaning the surface of the conveyor belt.

It has been found that the flexible nature of the ribbon maximises the area of contact between the cleaning element and the conveying surface, that is the surface of the conveyor belt in contact with the matter conveyed during normal use of the conveyor belt system.

Thus the present invention provides conveyor belt cleaning apparatus which effects cleaning in a simple yet efficient manner and without causing damage or wear to the conveyor belt surface.

It is preferred that the ribbon is caused, in use, to move the relative opposition direction to the direction of travel of the conveyor belt to be cleaned. In a simple embodiment of the invention, the ribbon is mounted such that movement of the conveyor belt directly drives via a suitable linkage the movement of the ribbon, and it is also envisaged that movement of the ribbon may be controlled by manually operable means.

However it is preferred that a separate drive means is provided to control movement of the ribbon. The drive means may be responsive to the speed of travel of the conveyor belt itself. The movement of the cleaning ribbon can be slow but continuous, or incremental and/or intermittent.

The ribbon may move in the opposite direction to the motion of the conveyor belt or may move in the same direction but at a slower speed, thus creating a skidding effect when in contact with the conveyor.

In one embodiment, the cleaning ribbon itself comprises a continuous belt mounted on a number of rollers, the outer surface of the ribbon providing a cleaning surface.

In an alternative embodiment the ribbon of sheet material is initially wound around a first reel for storage purposes, and when required, the ribbon is unwound and caused to pass against the surface of the conveyor belt for at least part of its travel. The used ribbon is then wound around a second reel and may be discarded or alternatively removed and cleaned for subsequent re-use.

It is preferred that, in use, at least a section of the ribbon is tensioned, and it is this section of the ribbon that is brought into contact with the conveying surface of the conveying belt.

The ribbon may be tensioned by passing it over rollers in close proximity to the conveyor belt surface, which serve to urge the ribbon against the surface to be cleaned, with the desired pressure or contact force. When the cleaning apparatus is disposed about the return, or discharge, end of the conveyor belt it is preferred that the tension in the ribbon is such that, in use, a portion of the ribbon conforms with the profile of the conveyor belt in this region. In an alternative embodiment, the ribbon is pressed against the conveyor belt by another roller. This has an advantage of squeezing cleaning agent onto the conveyor belt.

The rollers may be resiliently mounted so that the cleaning ribbon is firmly held against the conveyor belt, whilst allowing some degree of take up to allow for joins in the conveyor belt etc.

The ribbon is formed from flexible material of a porous nature. The ribbon can hold the cleaning agent which may, for example, be an aqueous solution. The ribbon can be of porous material of varying thickness, e.g. a thin material web or a sponge.

The ribbon may be coated with cleaning and/or disinfectant solutions, or it may be caused to pass through or become impregnated with such a solution prior to contact with the conveyor belt surface. The cleaning/disinfectant solution may be varied according to the nature of use of the conveyor belt, and the type of matter conveyed thereon.

The nature and surface of the cleaning ribbon may also be varied eg providing ridges or ribs, according to the aggressiveness of the cleaning action required.

According to a further aspect of the invention there is provided conveyor belt apparatus having a moveable conveyor belt and which comprises cleaning apparatus as described above.

One embodiment of the present invention will now be described by way of example only with reference to the following illustrative drawings in which :-
Fig 1 is a diagrammatic view illustrating the basic principles of operation, according to an embodiment of the invention; and
Fig 2 is a diagrammatic view illustrating apparatus for putting the invention into operation.

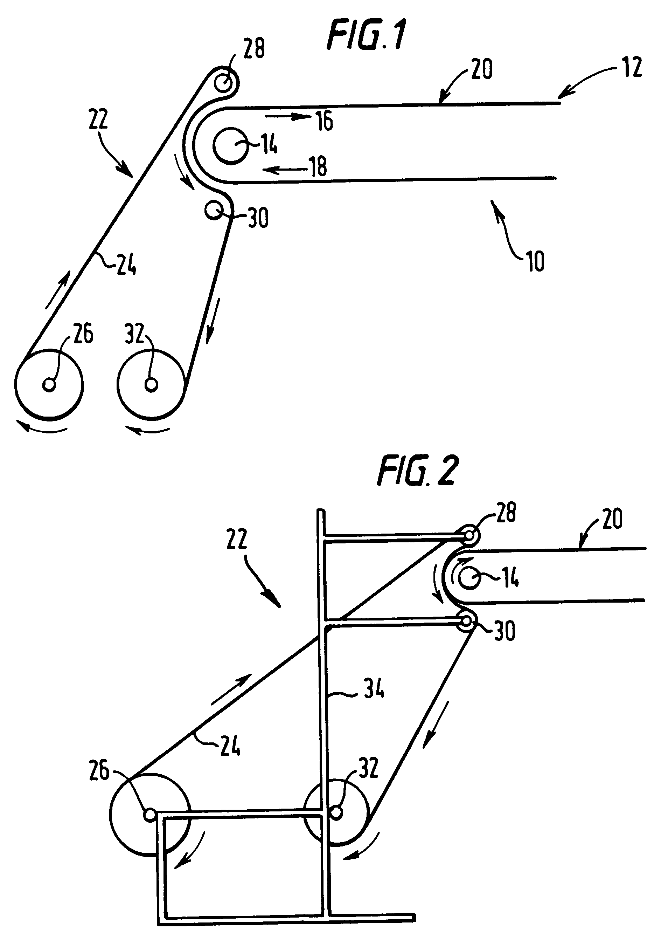

Referring now to Figure 1, a conveyor belt system 10, comprises a continuous belt 12 mounted on rollers 14.

As can be seen in the drawings, the upper run 16 of the conveyor belt 12 moves to the right, and the lower run 18 returns to the left. The outer surface 20 of the conveyor belt 12 is in contact with the matter conveyed by the system in normal use, and constitute the conveying surface.

Cleaning apparatus 22 comprises a flexible ribbon of resilient porous material 24, such as paper tape precoated with cleaning and disinfectant solutions. The ribbon 24 is initially wound around a first reel 26 for storage purposes, and when required, the end of the ribbon 24 is pulled over two rollers 28 to, 30 and wound around a second reel 32, by rotation of the reels 26, 32. The direction of rotation of the reels 26, 32 and thus the direction of movement of the ribbon 24 is opposite to the direction of travel of the conveyor belt 12.

In use the rollers 28, 30 and reels 26, 32 are mounted on a frame 34, shown in Figure 2. The cleaning ribbon 24 is tensioned as it passes over the rollers 28, 30 and it is pulled countercurrent to the direction of travel of the conveyor belt 12 for a defined straight line along the conveying surface 20. Relative movement of the ribbon 24 and the conveyor belt 12 effects a wiping or cleaning action.

In the illustrated embodiment, the cleaning apparatus is located adjacent the discharge end of the conveyor belt 12. However, it may likewise be located in any convenient position along the run of the conveyor belt.

For an automatically controlled system, a constant speed of rotation of the reels 26, 32 is required and the speed of rotation depends upon the speed of travel of the conveyor belt 12. This can be achieved by providing a drive unit (not shown) which is constructed in a similar manner to the capstan drive of an audio tape recorder, as such a drive enables a constant speed to be maintained. The drive unit itself may comprise a stepper motor, which is relatively inexpensive, and yet can achieve a slow and exact speed of rotation, which may be increased or decreased by an electronic close control loop connected to the conveyor belt system.

It is envisaged that cleaning apparatus according to the present invention may be manufactured as a separate unit to the conveyor belt system, the unit being movable into position when the conveyor system is out of normal use. Alternatively, the units may be an integral part of the conveyor system and can be used continuously or intermittently.

It is preferred that the width of the cleaning ribbon corresponds substantially to the width of the conveyor belt so as to enable full width cleaning. However it is also envisaged that the width of the ribbon may be varied such that only a portion of the conveyor belt is cleaned at one time. Alternatively, the ribbon may pass at an angle across the belt, ensuring the whole belt is wiped by a ribbon narrower than the belt.

## Claims

1. Cleaning apparatus (22) adapted for use in cleaning the conveying surface (20) of a moveable conveyor belt (12) comprising a cleaning element being at least temporarily contactable with the conveying surface of the conveying belt to effect cleaning thereof, and
characterised in that said cleaning element comprises a flexible ribbon of resilient porous material (24).

2. Apparatus according to claim 1 further comprising support means (28,30) adapted to urge the ribbon (24) into contact with the conveying surface (20) of the conveyor belt (12).

3. Apparatus according to claim 1 or claim 2 characterised in that during cleaning said ribbon (24) is moveable in the opposite direction relative to the direction of travel of the conveyor belt.

4. Apparatus according to any one of the preceding claims further comprising drive means associated with said cleaning element for selectively moving said ribbon (24) with respect to the conveyor belt (12).

5. Apparatus according to any one of the preceding claims characterised in that the cleaning element (24), in use, is disposed about at least a portion of a return end of the conveyor belt (12).

6. Apparatus according to claim 5 characterised in that the cleaning element is adapted, in use, to conform with the profile of at least a portion of a return end of the conveyor belt.
